# FASCICULE DE BREVET EUROPEEN

(11) **EP 3 472 993 B1**
(45) Date de publication et mention de la délivrance du brevet: **27.04.2022**
(21) Numéro de dépôt: 17735208.5
(22) Date de dépôt: 12.06.2017
(51) Int. Cl.: H04W 76/10

(54) **PROCÉDÉ DE DÉTERMINATION D'UN ENSEMBLE DE FORMATS DE CODAGE POUR ÉTABLIR UNE COMMUNICATION**
VERFAHREN ZUR BESTIMMUNG EINES SATZES VON CODIERUNGSFORMATEN ZUM AUFBAU EINER KOMMUNIKATION
METHOD FOR DETERMINING A SET OF ENCODING FORMATS IN ORDER TO ESTABLISH A COMMUNICATION

(30) Priorité: 20.06.2016 FR 1655701
(43) Date de publication de la demande: 24.04.2019
(73) Titulaire: ORANGE, 92130 Issy-les-Moulineaux (FR)
(72) Inventeur: BOUVET, Bertrand, 22700 Perros Guirec (FR); BOIZARD, Stéphane, 31620 Fronton (FR)
(86) Numéro de dépôt international: PCT/FR2017/051493
(87) Numéro de publication internationale: WO 2017/220883

(56) Documents cités:
- US-A1- 2007 171 841
- US-A1- 2009 003 570
- US-A1- 2014 362 764

## Description

### Domaine technique

La demande d'invention se situe dans le domaine des télécommunications et plus particulièrement dans les services de réseaux mobiles ou fixes mettant en œuvre une technologie de type IMS (Internet Multimedia subsystem).

### Art antérieur

Les nouveaux réseaux de télécommunications comme par exemple les réseaux de type IMS (Internet Multimedia Subsystem) proposent des services multimédia diversifiés tels que la voix, la vidéo ou la messagerie instantanée. Afin de s'adapter à différentes contraintes, ces services mettent en œuvre différents codecs et protocoles pour chacune des modalités de communication. Par exemple, une communication audio sur un réseau IMS peut mettre en œuvre un codec G.711, G.722, AMR ou encore AMR-WB. Le format de codage effectivement utilisé lors de la communication résulte d'une négociation entre les terminaux et autres équipements réseaux impliqués dans la communication. Ainsi, pour chacune des modalités de communication qu'ils supportent, les terminaux disposent d'une pluralité de codecs leur permettant de s'adapter à un maximum de situations. Ces codecs sont également implémentés dans des équipements réseau média (ex : IMS-AGW, MGW, MRF, A/I-SBC, Voice mail, portail vocal, interceptions légales, etc...) ou des terminaisons réseau tels que les passerelles résidentielles.

Lorsqu'un terminal s'enregistre sur un réseau de télécommunication, tel qu'un réseau IMS, il fournit différentes informations, comme par exemple ses identités publiques et privées, une adresse de contact, et les services qu'il supporte. Toutefois, lors de son enregistrement sur le réseau, un terminal n'indique pas les codecs qu'il supporte. Ainsi, un terminal peut s'enregistrer auprès d'un service de télécommunications même s'il ne dispose d'aucun codec supporté par les équipements intermédiaires et les terminaux du réseau.

Lorsqu'un terminal qui ne dispose pas de codecs compatibles est enregistré auprès d'un service de télécommunications, il consomme inutilement des ressources à la fois dans le cœur de réseau et dans le réseau d'accès. Il peut s'agir de ressources critiques, comme par exemple une ressource d'accès radio LTE (Long Term Evolution) utilisée pour échanger des messages de renouvèlement de l'enregistrement ou de souscriptions à différents services. Un terminal qui s'enregistre auprès d'un service VoIP (voice Over IP) sans disposer de codecs compatibles pose également des problèmes au niveau de l'ergonomie du service de télécommunication. En effet, un terminal régulièrement enregistré sur le réseau, apparaît comme joignable, mais ne pourra pas établir de communication. En cas d'appel entrant, le réseau pourra dans certains cas mettre en œuvre une solution de repli, comme par exemple établir une communication circuit vers le même terminal. Cela occasionne un allongement du temps d'établissement de la communication ou bien cela pourra provoquer un renvoi d'appel systématique vers sa messagerie.

On observe également que les terminaux permettent aujourd'hui d'utiliser un service de communication indépendamment du réseau d'accès. Par exemple, la technologie IMS permet aux terminaux de se connecter au service par l'intermédiaire d'un réseau d'accès Wi-Fi (VoWiFi pour Voice Over Wi-Fi) ou par l'intermédiaire d'un réseau d'accès cellulaire (VoLTE pour Voice Over Long Term Evolution). Les codecs disponibles sur un terminal sont les mêmes quelle que soit la technologie d'accès. Pourtant, un opérateur télécom peut souhaiter prioriser ou interdire l'usage de certains codecs selon la technologie d'accès.

Les opérateurs télécoms réalisent parfois des opérations de maintenance sur certains équipements ou tronçons du réseau. De telles opérations de maintenance peuvent influer de façon plus ou moins durable sur la bande passante disponible dans certaines parties du réseau. Il n'existe pas de mécanisme permettant à un opérateur de limiter dynamiquement l'usage de certains codecs dans ces circonstances particulières. La configuration de règles de filtrage sur certains nœuds du réseau n'est pas une solution satisfaisante, car un tel filtrage s'appliquerait à un grand nombre de terminaux, y compris à ceux qui ne sont pas concernés par l'opération de maintenance, du fait de la centralisation des équipements dans l'architecture IMS et de mécanismes dynamiques de partage de charge sur les différents équipements, par exemple via résolution DNS (Domain Name Server).

On peut enfin noter que les terminaux supportent aujourd'hui de nombreux codecs. Lors de l'établissement d'une communication, cette liste de codecs est échangée avec d'autres terminaux et équipements réseaux. La taille des messages de signalisation peut ainsi être telle qu'elle occasionne une fragmentation des messages de signalisation. Cette fragmentation provoque une multiplication des paquets IP (internet Protocol), ce qui induit une baisse de performance des équipements et une consommation accrue de bande passante.

Le document US 2007/0171841 décrit un procédé pour transmettre des données dans un réseau de télécommunication requérant l'application d'algorithmes de codage et/ou de décodage (codecs), dans lequel au moins un nœud du réseau fournit une liste de codecs disponible et la transmet à un autre nœud du réseau qui choisit dans la liste reçue et à partir d'une liste de codecs disponibles en cet autre nœud, une combinaison de codecs à utiliser pour la transmission des données.

Le document US 2014/0362764 décrit un procédé de sélection d'une liste de codecs particulière durant un processus de négociation de codecs mis en œuvre dans un réseau.

Il existe donc un besoin pour une solution permettant à des opérateurs de contrôler, au moment de son enregistrement, les codecs utilisables par un terminal.

### Résumé de l'invention

A cet effet, l'invention concerne un procédé de détermination d'un ensemble de formats de codage utilisables par un premier terminal pour établir des communications avec un second terminal au travers d'un réseau de communication, le premier terminal étant connecté à un réseau de communication par l'intermédiaire d'un réseau d'accès.

Le procédé est défini par l'objet de la revendication 1.

Le terme « format de codage » se rapporte ici à une donnée permettant d'identifier un standard de compression et/ou de décompression d'un signal numérique. Un tel dispositif de compression et/ou décompression est communément appelé « codec », pour codeur-décodeur. Par exemple, le standard G.711 définit un format de codage audio, et h.264 définit un format de codage vidéo.

On entend par réseau d'accès un réseau permettant à un terminal d'accéder à un réseau de communication. Il peut s'agir par exemple d'un réseau Wi-Fi, d'un réseau cellulaire, d'un réseau Ethernet ou de tout autre type de réseau permettant à un terminal de se connecter à un réseau de communication. Un type de réseau d'accès correspond ici à une donnée permettant d'identifier le type d'un réseau d'accès particulier.

Les termes « service de communication » correspondent dans cette description à des services auxquels le terminal peut accéder grâce aux capacités offertes par le réseau de communication ou les options souscrites par l'utilisateur auprès d'un opérateur du réseau. Il peut s'agir par exemple de modalités de communication telles que la possibilité d'établir ou non des communications vidéo, audio ou encore de messagerie instantanée.

Un terminal peut être ici n'importe quel type d'équipement de communication, comme par exemple un terminal mobile de type Smartphone ou tablette, un téléphone mobile, un pont de conférence ou encore un objet connecté quelconque.

Un tel procédé de détermination propose de restreindre les codecs utilisables par un terminal en fonction des capacités du réseau, de l'accès réseau et des services de communications utilisés par le terminal à un instant donné. Les capacités du réseau correspondant à des formats de codage autorisés pour un réseau d'accès et/ou un service de communication donné. Par exemple, un opérateur réseau peut décider de ne pas autoriser certains formats de codage à partir des accès sur lesquels la bande passante est rare et coûteuse. L'opérateur peut aussi décider d'autoriser ou d'interdire l'utilisation de certains formats de codage pour certains types de services ou d'offres commerciales.

Ainsi, l'invention propose d'obtenir, auprès d'un serveur, un premier ensemble de codecs autorisés par type d'accès réseau et par type de service de communication, de comparer ce premier ensemble avec l'ensemble des codecs supportés par le terminal, et d'en déduire un troisième ensemble ne contenant que les codecs supportés par le terminal, et autorisés par le réseau dans les conditions d'accès au réseau et au service du terminal. Le premier ensemble est constitué par une ou plusieurs listes de codecs. Chacun des codecs du premier ensemble est associé à un type de réseau d'accès dans le cadre duquel son utilisation est autorisée ou interdite. Chacun des codecs est également associé, de manière explicite ou implicite, à un type de service dans le cadre duquel l'utilisation du codec est autorisée ou interdite. Dans un mode de réalisation particulier, chaque codec est associé à une priorité d'utilisation.

De cette façon, le procédé permet la détermination d'un ensemble de formats de codage utilisables par un terminal pour établir, via un réseau de communication, des communications selon des modalités particulières et à partir d'un réseau d'accès particulier.

Selon un mode particulier de réalisation, le procédé est tel qu'il comporte en outre une étape de désenregistrement du premier terminal lorsqu'aucun des formats de codage supportés par le terminal n'est compris dans le premier ensemble, ou que le troisième ensemble est vide.

De cette façon, lorsque le terminal ne supporte aucun format de codage autorisé par le réseau, le terminal est désenregistré du service de communication. Ainsi, le terminal dépourvu de capacités de communication n'utilise pas inutilement des ressources comme c'est le cas avec la technique actuelle.

Selon une réalisation particulière, le procédé est tel qu'au moins un format de codage du premier ensemble est en outre associé à un identifiant d'un point d'accès réseau.

Une telle disposition permet à un opérateur du réseau d'interdire l'usage d'un format de codage particulier lorsqu'un terminal accède au réseau depuis un point d'accès particulier. De cette façon, lorsque les capacités du point d'accès sont réduites lors d'une opération de maintenance par exemple, un opérateur peut s'assurer que seuls les formats de codage les plus économes en bande passante seront utilisés.

Selon une réalisation particulière, le procédé est tel que :
- le procédé est mis en œuvre dans un terminal,
- le premier ensemble de formats est obtenu à partir d'un message en provenance d'un serveur

Le procédé peut ainsi être mis en œuvre par un terminal. Pour cela, le terminal peut par exemple souscrire à des évènements relatifs aux codecs supportés par le réseau de télécommunication, de façon à recevoir régulièrement un message contenant un ensemble de formats de codage autorisés par le réseau. Le terminal peut aussi obtenir le premier ensemble à partir d'un message de réponse à une requête de découverte de capacités, telle que par exemple une requête SIP OPTIONS. Le terminal peut ainsi déterminer les formats de codages qu'il peut utiliser sur le réseau, à partir du premier ensemble reçu et du second ensemble obtenu à partir de ses propres capacités de communication, du type de réseau d'accès auquel il est connecté et du type de service auquel il souhaite accéder. A partir du troisième ensemble, le terminal génère un message d'établissement de communication comportant les formats de codage déterminés. Par exemple, le terminal génère une description de session SDP (Session Description Protocol) de ces capacités à partir des formats déterminés dans le troisième ensemble et insère cette description dans un message de signalisation de type SIP INVITE, SIP UPDATE, SIP ACK, SIP 183 In Progress ou encore SIP 200OK. En évitant que les messages de signalisation d'appels issus du terminal ne comprennent des codecs qui ne sont pas supportés ou autorisés par le réseau, l'invention permet de réduire le trafic en diminuant la tailles des données échangées, de réduire le temps de traitement des requêtes par les serveurs de communication par une réduction du volume de données à traiter et de réduire le risque de fragmentation des paquets IP.

Selon une réalisation particulière, le procédé est tel qu'il comporte en outre, une étape de téléchargement d'un module exécutable pour l'encodage et le décodage d'une composante d'une communication lorsque le troisième ensemble de formats d'encodage est vide. Lorsqu'au moins un format de codage autorisé par le réseau n'est pas supporté par le terminal, ce dernier peut télécharger un module exécutable comportant les instructions pour encoder et/ou décoder des données selon ce format de codage. Ainsi, un terminal qui ne dispose pas des capacités lui permettant d'établir des communications sur le réseau peut obtenir auprès d'un serveur un module exécutable lui permettant d'établir des communications selon au moins un format de codage autorisé.

Selon un mode de réalisation particulier, le procédé est tel que :
- le procédé est mis en œuvre dans un serveur,
- le second ensemble de formats est obtenu à partir d'un message en provenance du premier terminal.

L'invention peut être mise en œuvre par un serveur, tel qu'un serveur d'applications (AS pour Application Server) d'un réseau de communication. Le serveur d'application obtient le second ensemble de formats de codage relatif aux capacités du terminal à partir d'un message en provenance de ce terminal. Un tel message peut être un message d'établissement de communication comme par exemple un message SIP INVITE ou une réponse SIP 200OK, SIP 183, ou encore un message SIP UPDATE ou SIP ACK. Le second ensemble de formats peut aussi être obtenu à partir d'un message de découverte des capacités, comme par exemple une requête SIP OPTIONS ou une réponse à une telle requête. Par exemple, le serveur peut intercepter un message d'établissement d'appel et en extraire le type de réseau d'accès utilisé par le terminal, le service de communication souhaité par le terminal ainsi que les codecs supportés par le terminal afin de constituer le second ensemble. A partir des premiers et seconds ensembles obtenus, le serveur d'application peut déterminer un troisième ensemble de codecs autorisés pour la communication sur le réseau. Le message d'établissement d'appel est modifié de façon à remplacer les codecs déclarés par le terminal par les codecs du troisième ensemble, compatibles avec les capacités du terminal et celles du réseau dans les conditions d'accès et de service du terminal.

Selon un mode particulier de réalisation, le procédé est tel que le premier ensemble de formats de codage est obtenu à partir d'un message de notification en provenance d'un serveur de profils d'utilisateurs du réseau de communication.

Le premier ensemble de formats peut être obtenu par un message de notification en provenance d'un serveur de profils utilisateurs tel qu'un HSS (Home Subscriber Server) ou un SDM (Subscriber Data Managment) dans le cas d'un réseau IMS. Un tel serveur centralise les informations relatives aux utilisateurs. Ainsi, l'invention propose d'ajouter dans les profils clients présents dans un tel serveur, les codecs autorisés pour chaque type d'accès (2G, 3G, 4G, 5G, Wi-Fi, ...) et pour chaque service de communication (voix, vidéo, ...).

On peut noter que les terminaux mobiles sont localisés par le réseau de télécommunication mobile à chaque changement de groupe de cellule radio. Cette information de localisation est mémorisée en temps réel dans le HSS / SDM. Ainsi, le procédé permet de mettre en œuvre des restrictions d'usage de formats de codage selon le point d'accès utilisé par le terminal.

Selon un autre aspect, l'invention concerne un dispositif de détermination d'un ensemble de formats d'encodage utilisables par un premier terminal pour établir des communications avec un second terminal au travers d'un réseau de communication, le premier terminal étant connecté à un réseau de communication par l'intermédiaire d'un réseau d'accès, le dispositif étant caractérisé en ce qu'il comporte :
- un module de communication adapté pour recevoir un premier ensemble de formats de codage autorisés sur le réseau de communication, chaque format de l'ensemble étant associé à un type de réseau d'accès et à un type de service de communication,
- un module d'obtention d'un second ensemble de formats de codage supportés par le terminal, d'un type de réseau d'accès, et d'un type de service de communication utilisés par le terminal,
- un comparateur adapté pour déterminer un troisième ensemble de formats de codage, le troisième ensemble correspondant à un ensemble de formats de codage supportés par le terminal et autorisés par le réseau compte tenu du type d'accès réseau et du type de service de communication utilisé par le terminal,
ledit dispositif de communication étant en outre adapté à provoquer un désenregistrement du terminal ou un téléchargement vers le terminal d'un module exécutable comprenant des instructions pour mettre en œuvre un format de codage autorisé par le réseau, lorsque le troisième ensemble est vide.

Selon encore un autre aspect, l'invention se rapporte à un terminal de communication comportant un dispositif de détermination tel que décrit ci-dessus.

L'invention concerne aussi, selon un autre aspect, un serveur tel qu'il comporte un dispositif de détermination tel que décrit ci-dessus.

L'invention concerne aussi un programme d'ordinateur comportant les instructions pour l'exécution du procédé de détermination tel que décrit ci-dessus, lorsque le programme est exécuté par un processeur.

Enfin, l'invention se rapporte à un support d'informations lisible par un processeur sur lequel est enregistré un programme d'ordinateur comprenant des instructions pour l'exécution des étapes du procédé de détermination tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé tel que défini ci-dessus.

Les terminaux, serveurs, dispositifs, programmes et supports d'informations présentent au moins des avantages analogues à ceux conférés par le procédé auquel ils se rapportent et décrit ci-dessus.

### Liste des figures

D'autres caractéristiques et avantages apparaîtront à la lecture de modes de réalisation préférés décrits en référence aux figures parmi lesquelles :
- La figure 1 illustre une architecture adaptée pour mettre en œuvre le procédé de détermination selon un mode particulier de réalisation de l'invention,
- La figure 2 illustre les principales étapes du procédé de détermination selon un mode de réalisation particulier de l'invention, et
- La figure 3 représente l'architecture d'un dispositif adapté pour la mise en œuvre du procédé de détermination selon une réalisation particulière de l'invention.

### Description détaillée

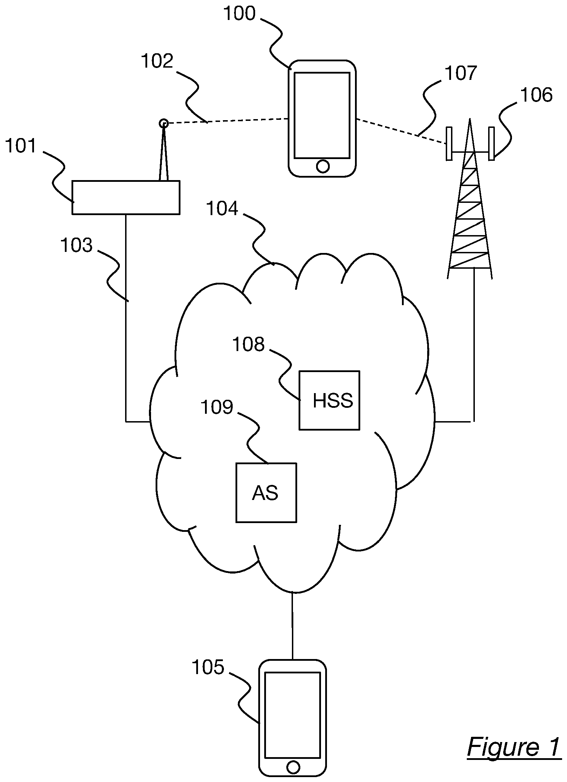

La figure 1 illustre une architecture adaptée pour mettre en œuvre le procédé de sélection selon un mode particulier de réalisation de l'invention.

La figure 1 représente un terminal 100 connecté à un point d'accès 101 par l'intermédiaire d'une liaison sans fil 102. Le terminal 100 est un terminal de communication de type Smartphone disposant d'au moins deux interfaces réseau lui permettant de se connecter de différentes manières à un réseau de communication 104.

Une première interface réseau du terminal 100 est par exemple une interface réseau Wi-Fi adaptée pour connecter le terminal au point d'accès 101. Un tel point d'accès est par exemple un modem routeur ADSL offrant une interface de communication sans fil 102 de type Wi-Fi. Le point d'accès 101 comprend également une seconde interface de communication 103, par exemple une interface de type ADSL (Asymétrie Digital Subscriber Line) vers un réseau de communication 104. Le réseau 104 est par exemple un réseau de type IMS (Internet Multimedia Subsystem). Le terminal 100 peut ainsi établir une communication avec un second terminal 105 par l'intermédiaire de la connexion Wi-Fi 102, du modem-routeur 101, du réseau ADSL 103 et du réseau de communications 104.

Le terminal 100 dispose également d'une seconde interface réseau. Cette interface est adaptée pour connecter le terminal au réseau de communication 104 par l'intermédiaire d'un second réseau d'accès 106. Le réseau d'accès 106 est par exemple un réseau cellulaire de type 2G, 3G ou 4G. Le terminal 100 peut ainsi établir une communication avec le terminal 105 au travers d'une connexion 107 au réseau cellulaire 106 et du réseau de communication 104.

Ainsi, le terminal peut établir des communications avec le terminal 105 au moyen de l'une ou l'autre des interfaces réseaux dont il dispose.

Le réseau IMS comporte en outre un serveur de profils d'utilisateurs 108 qui peut correspondre par exemple à un serveur HSS (Home Subscriber Server) et un serveur d'application (Application Server) 109. Un serveur HSS tel que le serveur 108 comprend une base de données contenant la liste des utilisateurs et leurs droits et autorisations associés, ainsi que l'état des enregistrements et les sessions d'appels en cours. Un tel serveur peut fournir des informations de localisation des utilisateurs et communique avec d'autres entités du cœur de réseau IMS par l'intermédiaire du protocole « Diameter ». En particulier, le serveur 108 peut communiquer avec le serveur d'application 109 pour lui notifier des modifications de la base de données. Le serveur d'application 109 héberge et exécute des services de communication et s'interface avec d'autres équipements du réseau par l'intermédiaire du protocole SIP. En particulier, le serveur 109 peut intercepter les messages de signalisation échangés entre le terminal 100 et le terminal 105.

Bien que la présente description soit faite en référence à un réseau de communication de type IMS, l'invention ne se limite nullement à ce type de réseau et convient à différents types de réseaux et/ou protocoles de communications.

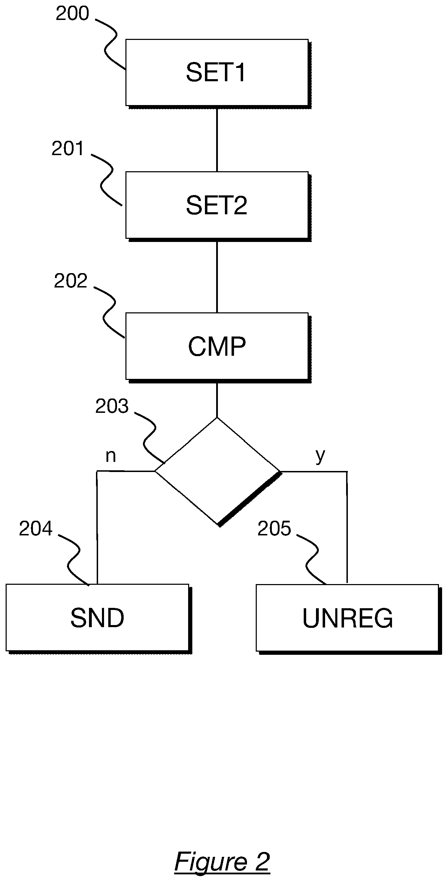

La figure 2 illustre les principales étapes du procédé de détermination selon un mode de réalisation particulier de l'invention.

Dans un premier mode de réalisation particulier, le procédé de détermination est mis en œuvre dans un terminal tel que le terminal 100 de la figure 1.

Lors d'une première étape 200, le terminal 100 obtient un premier ensemble de formats de codage autorisés sur le réseau de communication 104.

Le terminal obtient ce premier ensemble à partir d'un message de notification en provenance du serveur 109. La notification est reçue suite à une souscription à un type d'événement approprié. Par exemple, le terminal 100 peut transmettre une requête SIP SUBSCRIBE au serveur 109 de manière à recevoir des notifications relatives à un changement dans les restrictions d'utilisation de codecs sur le réseau. Le premier ensemble est alors reçu dans un message SIP NOTIFY émis par le serveur 109. Les formats de codage autorisés sont indiqués dans le corps du message de notification dans une structure de données appropriée, par exemple dans un document conforme au format XML. Le serveur d'application 109 peut lui-même obtenir l'ensemble des formats de codage autorisés à partir du serveur HSS 108 par l'intermédiaire du protocole Diameter.

Une telle notification peut être reçue à intervalle régulier, ou bien uniquement au moment de la souscription et des modifications ultérieures des formats de codage autorisés sur le réseau.

Dans la structure de données obtenue, un ou plusieurs formats de codage sont associés de manière explicite ou implicite à un type de réseau d'accès. L'information de type de réseau d'accès peut correspondre au RAT (Radio Access Technology) ou à tout autre identifiant permettant d'identifier le type d'un réseau d'accès. Un tel identifiant permet en particulier de distinguer les différentes technologies de réseau d'accès (2G, 3G, 4G, 5G, Wi-Fi, etc...). Ainsi, l'ensemble de formats de codage reçu permet au terminal 100 de déterminer les codecs qu'il peut utiliser pour établir des communications sur le réseau d'accès 102, et les formats de codage qu'il peut utiliser lorsqu'il se connecte par l'intermédiaire du réseau cellulaire 107.

Dans la structure de données obtenue, un ou plusieurs formats de codage peuvent en outre être associés à un type de service de communication, une telle association pouvant être explicite ou implicite. Lorsque le type de service de communication correspond à des médias utilisables lors d'une communication, cette association peut être implicite. Par exemple, un format de codage AMR est associé de manière implicite à un service de communication de type audio, alors qu'un format de codage de type H.264 est associé de manière implicite à un service de communication vidéo. Lorsque le type de service de communication se réfère à une offre commerciale relative par exemple à un débit maximum ou une qualité de service alloué par l'opérateur au terminal 100, l'association peut être explicite.

Ainsi, le terminal 100 connait les formats de codages autorisé selon le type de réseau d'accès et le service de communication qu'il compte utiliser pour une communication.

Les formats de codage peuvent également être associés à un identifiant du point d'accès. De cette manière, un opérateur réseau peut imposer des restrictions sur l'utilisation de certains codecs pour les communications établies par l'intermédiaire d'un point d'accès particulier. Une telle disposition peut s'avérer particulièrement utile lors de certaines opérations de maintenance sur un équipement desservant le point d'accès, afin de réduire le trafic. Un tel identifiant peut aussi être une indication relative à une zone géographique et correspondre à une pluralité de points d'accès. Il est ainsi possible pour un opérateur d'imposer des restrictions lors de communication passées à partir d'emplacements regroupant un grand nombre d'utilisateurs, comme par exemple des équipements sportifs, des transports en commun ou encore à partir de régions victimes de catastrophes naturelles.

A l'étape 201, le terminal obtient un second ensemble de formats de codage. Ce second ensemble correspond aux capacités du terminal, c'est-à-dire aux codecs qu'il supporte pour les communications. Le terminal peut par exemple connaître ses propres capacités par l'intermédiaire d'une API (Application Programing Interface) du système d'exploitation. Le terminal obtient également le type de réseau d'accès auquel il est attaché. Cette information est généralement disponible par l'intermédiaire d'une API du système d'exploitation prévue à cet effet. Enfin, le terminal obtient une information relative au type de service de communication qu'il compte utiliser ou peut utiliser pour établir une communication. Cette information, lorsqu'elle se rapporte à un type de média (audio, vidéo, texte, ...) peut découler implicitement des capacités du terminal, mais aussi dépendre du type de communication qu'un utilisateur souhaite passer ou accepter. Dans ce cas, le type de service est connu au moment où l'utilisateur place ou accepte un appel. Lorsque le type de service de communication se rapporte à une offre commerciale souscrite par l'utilisateur du terminal 100, cette information peut être obtenue à partir d'une mémoire du terminal dans laquelle un profil de l'utilisateur est téléchargé lors de l'enregistrement sur le réseau de communication 104. Une telle information peut également être obtenue à partir d'une carte SIM du terminal ou d'une configuration du terminal par l'opérateur. Selon une réalisation particulière, le terminal obtient une donnée de localisation géographique à partir d'un composant de localisation GPS (Global Positionning System) du terminal ou à partir d'un identifiant de point d'accès auquel il est attaché.

Lors d'une étape 202, le terminal détermine un troisième ensemble de formats de codage. Ce troisième ensemble correspond à l'intersection du premier ensemble de formats transmis par le serveur 109 avec le second ensemble de formats correspondant aux capacités du terminal, en tenant compte du type de réseau d'accès et du type de service de communication utilisé par le terminal, et le cas échéant de la localisation géographique du terminal, déterminée par l'intermédiaire d'un identifiant du point d'accès. Pour réaliser cette intersection, le terminal recherche le second ensemble des formats de codage qui sont associés au type de réseau d'accès qu'il utilise et au service de communication déterminé. Le terminal obtient ainsi les différents codecs autorisés par le réseau dans sa situation. Le terminal compare ensuite cette liste de codecs utilisable avec ses propres capacités de manière à établir une liste des codecs qu'il supporte et qui sont autorisés sur le réseau.

A l'étape 203, le terminal examine le troisième ensemble afin de déterminer s'il comprend au moins un format de codage qui soit à la fois supporté par le terminal et autorisé par le réseau en fonction du réseau d'accès, du service demandé et le cas échéant de l'emplacement géographique du terminal.

Si le troisième ensemble est vide, le terminal 100 ne pourra établir aucune communication sur le réseau 104. Dans ce cas, le terminal transmet à l'étape 205 une demande de désenregistrement à destination du réseau de communication 104. Une telle disposition vise à libérer les ressources occupées dans le réseau du fait de l'enregistrement du terminal. Un terminal enregistré génère effectivement un trafic régulier pour renouveler son enregistrement et occupe des ressources dans la mémoire des équipements réseau. Le désenregistrement peut être réalisé de manière classique, par l'envoi d'une requête SIP REGISTER indiquant une durée d'enregistrement nulle via un entête « expires=0 ». Le fait de ne plus être enregistré ne perturbe pas la réception des notifications relatives aux formats de codage supportés par le réseau. Ainsi, selon une réalisation particulière de l'invention, le terminal pourra émettre une demande d'enregistrement si après réception d'une notification relative à une modification des codecs autorisés par le réseau, il constate qu'un format de codage qu'il supporte est devenu utilisable dans les conditions de service et d'accès réseau du terminal.

Selon une réalisation particulière, lorsque le troisième ensemble est vide, le procédé comporte en outre une étape de téléchargement, à partir d'un serveur, d'un module exécutable comprenant des instructions pour mettre en œuvre un format de codage autorisé par le réseau. De cette manière, le terminal 100 peut toujours établir une communication avec le terminal 105. Le téléchargement peut être effectué de manière classique à partir d'un serveur de téléchargement, comme par exemple un serveur http, dont l'URL (Universal Resource Locator) peut avoir été fournie au terminal lors d'une étape de configuration préalable.

Si à l'inverse le troisième ensemble déterminé par le terminal n'est pas vide, c'est-à-dire s'il contient au moins un format de codage utilisable par le terminal, le terminal transmet lors d'une étape 204, à destination du terminal 105, un message d'établissement d'une communication comprenant au moins un format de codage compris dans le troisième ensemble. Dans le cas d'une communication sortante, le terminal 100 peut ainsi préparer un message SIP de type INVITE configuré pour établir une communication avec le terminal 105. Dans le corps de ce message, le terminal 100 insère une description de ces capacités conforme au standard SDP (Session Description Protocol). Les capacités de communications indiquées dans la description SDP comprennent uniquement un ou plusieurs formats de codage compris dans le troisième ensemble de formats de codage déterminé lors de l'étape 202.

En procédant de la sorte, le procédé selon l'invention permet de garantir que seules des communications mettant en œuvre des codecs autorisées dans les conditions d'attachement et de service du terminal, peuvent être établies.

Selon un mode particulier de réalisation de l'invention, le procédé de détermination est mis en œuvre par un serveur tel que par exemple le serveur 109 de la figure 1.

L'étape 200 d'obtention est similaire à celle décrite précédemment, à la différence près que l'ensemble de format est obtenu à partir d'un serveur de profils utilisateurs tel que le serveur 108 de la figure 1. Il s'agit par exemple d'un serveur HSS configuré pour communiquer avec le serveur 109 par l'intermédiaire d'une interface Diameter « sh » normalisée entre le serveur d'application 109 et le HSS/SDM et fournir en plus des données de services qu'il fournit de manière classique, les codecs autorisés en fonction du RAT (Radio Access Technology). Cette interface peut être utilisée en mode « pull » et en mode « push », c'est-à-dire que le serveur 109 peut, lors de l'enregistrement initial du terminal 100, récupérer le profil de service auprès du serveur 108 puis, à chaque modification du profil de l'utilisateur dans le serveur 108, recevoir une notification comprenant les codecs autorisés à partir desquels le serveur 109 peut obtenir le premier ensemble de formats.

Le serveur 109 obtient à l'étape 201 un second ensemble de formats de codage comportant les formats supportés par le terminal. Le second ensemble est obtenu par le serveur 109 à partir d'un message en provenance du terminal 100. De façon préférentielle, ce message est un message de signalisation destiné à établir une communication entre le terminal 100 et le terminal 105. Par exemple, il peut s'agir d'un message SIP INVITE envoyé au terminal 105 par le terminal 100 et intercepté par le serveur 109. Les messages SIP INVITE comprennent de manière classique les capacités du terminal émetteur du message. Ces capacités sont indiquées selon le standard SDP (Session Description Protocol) et comporte les différents codecs supportés par le terminal.

Le message de signalisation peut également être un message de réponse SIP 200OK envoyé par le terminal 100 suite à la réception d'un message SIP INVITE envoyé par le terminal 105.

Le serveur 109 peut obtenir une information relative au réseau d'accès utilisé par le terminal à partir de ce même message, ou bien d'un message d'enregistrement intercepté au préalable. Par exemple, l'entête « P-Access-Network-Info » défini dans le document RFC3455 de l'IETF prévoit un mécanisme standardisé permettant à un terminal ou au point d'entrée du réseau de communication 104 de communiquer le type de réseau d'accès qu'il utilise dans un message SIP. Le serveur 109 peut également obtenir le type de réseau d'accès utilisé par le terminal à partir d'une notification transmise par le serveur de profils 108. Il peut s'agir du RAT dont un serveur HSS à connaissance suite à l'enregistrement du terminal et à la mise à jour de sa localisation lors du changement de LA (Location Area pour 2G/3G) ou TA (Tracking Area pour 4G). L'information relative au type de service de communication, lorsqu'elle concerne des composantes média d'une communication, est également disponible dans la description SDP SDP et/ou dans les identifiants de services (ICSI : IMS Communication Service Identifier) et/ou entête SIP (par exemple P-Asserted-Service) compris dans le message SIP d'établissement de communication intercepté. Lorsque le type de service de communication se rapporte à une offre commerciale souscrite par l'utilisateur, cette information peut être obtenue dans la notification transmise par le serveur 108 et décrite précédemment.

Ainsi, le serveur 109 obtient un second ensemble de formats de codage supportés par le terminal, un type de réseau d'accès et un type de service de communication utilisés par le terminal.

Le serveur 109 détermine ensuite un troisième ensemble de formats de codage, ce troisième ensemble correspondant à un ensemble de formats de codage supportés par le terminal et autorisés par le réseau compte tenu du type d'accès réseau et du type de service de communication utilisé par le terminal. Cette détermination est réalisée par le serveur 109 conformément à l'étape 202 décrite précédemment.

De manière similaire à l'étape 203 décrite en référence au mode de réalisation précédent, le serveur 109 examine le troisième ensemble afin de déterminer s'il comprend au moins un format de codage qui soit à la fois supporté par le terminal et autorisé par le réseau en fonction du réseau d'accès, du service demandé et le cas échéant de l'emplacement géographique du terminal.

Lorsque, suite à l'étape 203, le serveur 109 constate que le troisième ensemble est vide, c'est-à-dire qu'aucune communication n'est possible pour le terminal 100, le serveur 109 annule l'établissement de la communication.

Pour cela, le serveur 109 peut générer un message d'erreur en réponse au message d'établissement de communication envoyé par le terminal 100 à partir duquel le second ensemble de formats a été obtenu. Si ce message est un message de type SIP INVITE, le serveur 109 peut répondre par un message de type « 488 - Not acceptable here ». Il s'agit d'un message d'erreur utilisé de manière classique lorsqu'aucun des codecs proposés par un terminal n'est supporté par le terminal distant. Si le message est un message SIP 200OK émit par le terminal 100 en réponse à une invitation à établir une communication émise par le terminal 105, le serveur 109 peut annuler la communication en envoyant un message de type SIP CANCEL au terminal 100 et un message « 488 - not acceptable here » à destination du terminal 105.

Lorsque le serveur constate que le troisième ensemble est vide, le serveur 109 peut en outre provoquer le désenregistrement du terminal. Pour cela, le serveur 109 peut par exemple attendre le renouvellement de l'enregistrement du terminal et refuser à ce moment l'enregistrement par l'intermédiaire du mécanisme connu du « Third Party Registration ». Un tel mécanisme permet à des équipements d'un réseau IMS de faire suivre la demande d'enregistrement d'un terminal vers d'autres serveurs afin que ces derniers donnent leur accord à l'enregistrement. En l'espèce, un serveur S-CSCF (Serving - Call/Session Control Functions) prenant en charge le terminal 100 peut faire suivre la demande d'enregistrement du terminal au serveur d'application 109, ce dernier pouvant à ce moment-là refuser l'enregistrement du terminal.

Si suite à l'étape 203 le serveur 109 constate au contraire qu'au moins un codec du terminal est compatible avec les exigences du réseau, c'est-à-dire s'il constate que le troisième ensemble déterminé comporte au moins un format de codage utilisable, le serveur modifie le message de signalisation intercepté en supprimant de la description de session conforme au protocole SDP les codecs qui n'appartiennent pas au troisième ensemble. Le serveur 109 transmet ensuite le message modifié au terminal 105 destinataire du message.

Ainsi, le procédé permet d'éviter qu'une communication entre le terminal 100 et le terminal 105 soit établie selon un format de codage non autorisé par le réseau 104.

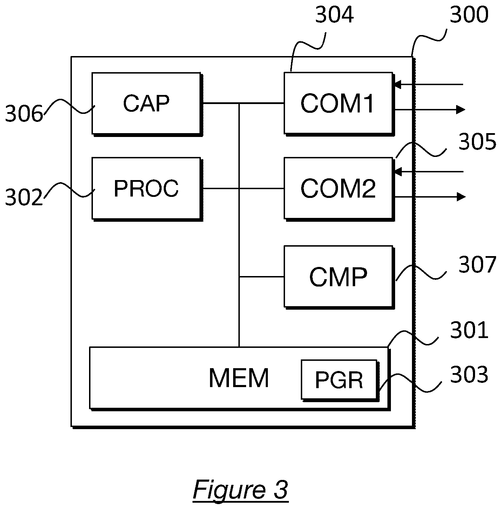

La figure 3 illustre l'architecture d'un dispositif adapté pour la mise en œuvre du procédé de détermination selon une réalisation particulière de l'invention.

Le dispositif 300 comprend un espace de stockage 301, par exemple une mémoire MEM, une unité de traitement 302 équipée par exemple d'un processeur PROC. L'unité de traitement peut être pilotée par un programme 303, par exemple un programme d'ordinateur PGR, mettant en œuvre le procédé de détermination tel que décrit dans l'invention en référence à la figure 2, et notamment les étapes d'obtention, à partir d'un serveur d'un premier ensemble de formats de codage autorisés sur le réseau de communication, chaque format de l'ensemble étant associé à un type de réseau d'accès et à un type de service de communication, d'obtention d'un second ensemble de formats de codage supportés par le terminal, d'un type de réseau d'accès, et d'un type de service de communication utilisés par le terminal, de détermination d'un troisième ensemble de formats de codage, le troisième ensemble correspondant à un ensemble de formats de codage supportés par le terminal et autorisés par le réseau compte tenu du type d'accès réseau et du type de service de communication utilisé par le terminal, et de transmission vers le second terminal d'un message d'établissement d'une communication comprenant au moins un format de codage compris dans le troisième ensemble lorsque le troisième ensemble n'est pas vide.

À l'initialisation, les instructions du programme d'ordinateur 303 sont par exemple chargées dans une mémoire RAM (Random Access Memory) avant d'être exécutées par le processeur de l'unité de traitement 302. Le processeur de l'unité de traitement 302 met en œuvre les étapes du procédé de détermination selon les instructions du programme d'ordinateur 303.

Pour cela, le dispositif comporte un module de communication 304 adapté pour recevoir un premier ensemble de formats de codage autorisés sur le réseau de communication, chaque format de l'ensemble étant associé à un type de réseau d'accès et à un type de service de communication. Un tel module peut être une interface réseau, par exemple une interface de type Ethernet, Wi-Fi ou tout autre interface réseau adaptée pour recevoir une notification en provenance d'un serveur tel que le serveur 109 décrit précédemment. Selon une réalisation particulière, le module 304 est adapté pour recevoir un ensemble de format dans une notification transmise par un serveur d'application. Selon une autre réalisation particulière, le module 304 est adapté pour recevoir un ensemble de format dans une notification transmise par un serveur de profils utilisateur tel qu'un HSS.

Le dispositif comporte aussi un module d'obtention 306 d'un second ensemble de formats de codage supportés par le terminal, d'un type de réseau d'accès, et d'un type de service de communication utilisés par le terminal. Selon une réalisation particulière, le module 306 est un module logiciel comprenant des instructions exécutable par le processeur 302 et configurées pour obtenir les capacités du terminal, c'est-à-dire pour obtenir un ensemble de formats de codage supportés par le terminal. De telles instructions peuvent inclure des appels à des API d'un système d'exploitation d'un terminal dans lequel est intégré le dispositif. Le module 306 comprend aussi des instructions incluant des appels à des APIs du système d'exploitation permettant d'obtenir le type de réseau d'accès auquel le terminal est attaché et un type de service de communication. Le type de service de communication peut être obtenu, lorsqu'il concerne les médias que l'utilisateur du terminal souhaite mettre en œuvre dans la communication, à partir des interactions de l'utilisateur avec une interface du terminal. Lorsque le type de service de communication se rapporte à une offre commerciale particulière, le module 306 peut comprendre des instructions permettant d'interroger des données de l'opérateur stockées dans une mémoire du terminal ou une carte SIM du terminal.

Selon une réalisation particulière, le module d'obtention 306 comporte des instructions configurées pour intercepter un message d'établissement de communication transmit par le terminal 100, analyser ce message afin d'en extraire une description de session au format SDP et obtenir un ensemble de codecs supportés par le terminal émetteur du message. Le module est en outre configuré pour extraire une information relative au type de réseau d'accès à partir d'un entête du message de signalisation comportant une indication sur le type de réseau d'accès utilisé. Le module 306 comprend aussi des instructions pour obtenir, à partir d'une notification émise par un serveur de profils utilisateur, un type de service de communication associé à l'utilisateur du terminal.

Le dispositif 300 comprend également un comparateur 307, adapté pour déterminer un troisième ensemble de formats de codage, le troisième ensemble correspondant à un ensemble de formats de codage supportés par le terminal et autorisés par le réseau compte tenu du type d'accès réseau et du type de service de communication utilisé par le terminal. Un tel comparateur peut être implémenté de manière logicielle par un programme d'ordinateur exécutable par le processeur 302 et configurées pour comparer un premier ensemble de formats de codage avec les formats de codage obtenus par l'intermédiaire du module 306. Le comparateur 307 est configuré pour tenir compte du type de réseau d'accès auquel est connecté le terminal et du type de service de communication envisagé pour établir une communication.

Le dispositif comporte enfin un module de communication 305 adapté pour transmettre vers un terminal destinataire tel que le terminal 105, un message d'établissement d'une communication comprenant au moins un format de codage compris dans le troisième ensemble lorsque le troisième ensemble n'est pas vide. Un tel module peut consister en une interface réseau de type Ethernet, 2G, 3G, 4G, 5G, Wi-Fi ou toute autre interface adaptée pour échanger des messages sur un réseau de communication. Selon une réalisation particulière selon laquelle le dispositif est intégré dans un terminal, le module 305 comprend en outre des instructions de programme d'ordinateur exécutables par le processeur 302 et configurées pour générer un message d'établissement de communication, comme par exemple un message SIP INVITE ou un message de réponse SIP 200OK, le message comprenant une description des capacités du terminal conforme au standard SDP, et dont les codecs déclarés sont tous issus du troisième ensemble déterminé. Selon une autre réalisation particulière selon laquelle le dispositif est intégré dans un serveur d'application tel que le serveur 109, le module de communication 305 comprend des instructions de programme d'ordinateur exécutables par le processeur 302 et configurées pour modifier un message d'établissement de communication en provenance du terminal 100 et à destination du terminal 105, la modification comprenant une étape de suppression, dans la description de session SDP comprise dans le message, des codecs non autorisé sur le réseau de communication, c'est-à-dire la suppression des codecs qui ne font pas partie du troisième ensemble.

Selon une réalisation particulière, le dispositif est intégré dans un terminal de communication tel qu'un téléphone mobile, un smartphone, une tablette, une passerelle résidentielle, un objet connecté ou tout autre terminal de communication.

Selon une réalisation particulière, le dispositif est intégré à un équipement réseau tel qu'un serveur d'application, un CSCF (Call State Control Function) ou un PCRF (Policy and Charging Rules Function).

## Revendications

1. Procédé de détermination d'un ensemble de formats d'encodage utilisables par un terminal pour établir des communications au travers d'un réseau de communication, le procédé étant **caractérisé en ce qu'**il comporte les étapes suivantes, mises en œuvre par un dispositif de communication:
- Obtention, à partir d'un serveur (200), d'un premier ensemble de formats de codage autorisés sur le réseau de communication, chaque format de l'ensemble étant associé à un type de réseau d'accès et à un type de service de communication,
- Obtention (201) d'un second ensemble de formats de codage supportés par un terminal s'enregistrant ou étant enregistré sur ledit réseau de communication, d'un type de réseau d'accès, et d'un type de service de communication utilisés par le terminal,
- Détermination (202) d'un troisième ensemble de formats de codage utilisables, lorsque ledit troisième ensemble n'est pas vide, par le terminal pour établir des communications, via ledit réseau de communication par l'intermédiaire d'un réseau d'accès, le troisième ensemble correspondant à un ensemble de formats de codage supportés par le terminal et autorisés par le réseau compte tenu du type de réseau d'accès et du type de service de communication utilisé par le terminal, et
- Désenregistrement du terminal ou téléchargement vers le terminal d'un module exécutable comprenant des instructions pour mettre en œuvre un format de codage autorisé par le réseau lorsque le troisième ensemble de formats d'encodage est vide.

2. Procédé selon la revendication précédente **caractérisé en ce qu'**au moins un format de codage du premier ensemble est en outre associé à un identifiant d'un point d'accès réseau.

3. Procédé selon l'une quelconque des revendications précédentes **caractérisé en ce que** :
- le procédé est mis en œuvre dans ledit terminal,
- le premier ensemble de formats est obtenu à partir d'un message en provenance d'un serveur.

4. Procédé selon l'une quelconque des revendications 1 ou 2 **caractérisé en ce que** :
- le procédé est mis en œuvre dans un serveur, et **en ce que** :
- le second ensemble de formats est obtenu à partir d'un message reçu en provenance dudit terminal.

5. Procédé selon la revendication 4 **caractérisé en ce que** le premier ensemble de formats est obtenu à partir d'un message en provenance d'un serveur de profils d'utilisateurs du réseau de communication.

6. Dispositif de communication, pour une détermination d'un ensemble de formats d'encodage utilisables par un terminal pour établir des communications au travers d'un réseau de communication, le dispositif étant **caractérisé en ce qu'**il comporte :
- Un module de communication (304) adapté pour recevoir d'un serveur un premier ensemble de formats de codage autorisés sur le réseau de communication, chaque format de l'ensemble étant associé à un type de réseau d'accès et à un type de service de communication,
- Un module d'obtention (306) d'un second ensemble de formats de codage supportés par un terminal s'enregistrant ou étant enregistré sur ledit réseau de communication, d'un type de réseau d'accès, et d'un type de service de communication utilisés par le terminal,
- Un comparateur (307), adapté pour déterminer un troisième ensemble de formats de codage utilisables, lorsque le troisième ensemble n'est pas vide, par le terminal pour établir des communications via ledit réseau de communication par l'intermédiaire d'un réseau d'accès, le troisième ensemble correspondant à un ensemble de formats de codage supportés par le terminal et autorisés par le réseau compte tenu du type de réseau d'accès et du type de service de communication utilisé par le terminal,
ledit dispositif de détermination étant en outre adapté à provoquer un désenregistrement du terminal ou un téléchargement vers le terminal d'un module exécutable comprenant des instructions pour mettre en œuvre un format de codage autorisé par le réseau, lorsque le troisième ensemble est vide.

7. Dispositif de communication selon la revendication 6 **caractérisé en ce qu'**au moins un format de codage du premier ensemble est en outre associé à un identifiant d'un point d'accès réseau.

8. Dispositif de communication selon la revendication 6 ou 7 **caractérisé en ce que** :
- ledit dispositif de communication est compris dans ledit terminal,
- le premier ensemble de formats est obtenu à partir d'un message en provenance d'un serveur.

9. Dispositif de communication selon la revendication 6 ou 7 **caractérisé en ce que** ::
- ledit dispositif de communication est compris dans un serveur, et **en ce que** :
- le second ensemble de formats est obtenu à partir d'un message reçu en provenance dudit terminal.

10. Dispositif de communication selon la revendication 9 **caractérisé en ce que** le premier ensemble de formats est obtenu à partir d'un message en provenance d'un serveur de profils d'utilisateurs du réseau de communication.

11. Terminal de communication **caractérisé en ce qu'**il comporte un dispositif de communication selon l'une quelconque des revendications 6 à 8.

12. Serveur **caractérisé en ce qu'**il comporte un dispositif de communication selon l'une quelconque des revendications 6, 9 ou 10.

13. Programme d'ordinateur comportant les instructions pour l'exécution par un dispositif de communication du procédé de détermination selon l'une quelconque des revendications 1 à 5 lorsque le programme est exécuté par un processeur associé au dispositif de communication.

14. Support d'informations lisible par un processeur sur lequel est enregistré un programme d'ordinateur comprenant des instructions pour l'exécution par un dispositif de communication des étapes du procédé de détermination selon l'une quelconque des revendications 1 à 5.

## Patentansprüche

1. Verfahren zur Bestimmung eines Satzes von Codierungsformaten, die von einem Endgerät zur Herstellung von Kommunikationen durch ein Kommunikationsnetz genutzt werden können, wobei das Verfahren **dadurch gekennzeichnet ist, dass** es die folgenden Schritte aufweist, die von einer Kommunikationsvorrichtung durchgeführt werden:
- Erhalten eines ersten Satzes von Codierungsformaten, die im Kommunikationsnetz zugelassen sind, von einem Server (200), wobei jedes Format des Satzes einem Zugangsnetztyp und einem Kommunikationsdiensttyp zugeordnet ist,
- Erhalten (201) eines zweiten Satzes von Codierungsformaten, die von einem Endgerät unterstützt werden, das sich im Kommunikationsnetz registriert oder darin registriert ist, eines Zugangsnetztyps und eines Kommunikationsdiensttyps, die vom Endgerät genutzt werden,
- Bestimmen (202) eines dritten Satzes von Codierungsformaten, die vom Endgerät genutzt werden können, wenn der dritte Satz nicht leer ist, um Kommunikationen über das Kommunikationsnetz mittels eines Zugangsnetzes herzustellen, wobei der dritte Satz einem Satz von Codierungsformaten entspricht, die vom Endgerät unterstützt werden und vom Netz zugelassen sind, unter Berücksichtigung des Zugangsnetztyps und des Kommunikationsdiensttyps, der vom Endgerät genutzt wird, und
- Entregistrieren des Endgeräts oder Herunterladen, auf das Endgerät, eines ausführbaren Moduls, das Anweisungen umfasst, um ein Codierungsformat einzusetzen, das vom Netz zugelassen ist, wenn der dritte Satz von Codierungsformaten leer ist.

2. Verfahren nach dem vorhergehenden Anspruch, **dadurch gekennzeichnet, dass** wenigstens ein Codierungsformat des ersten Satzes ferner einer Kennung eines Netzzugangspunkts zugeordnet ist.

3. Verfahren nach einem der vorhergehenden Ansprüche, **dadurch gekennzeichnet, dass**:
- das Verfahren in dem Endgerät durchgeführt wird,
- der erste Satz von Formaten aus einer Nachricht von einem Server erhalten wird.

4. Verfahren nach einem der Ansprüche 1 oder 2, **dadurch gekennzeichnet, dass**:
- das Verfahren in einem Server durchgeführt wird, und dadurch, dass:
- der zweite Satz von Formaten aus einer Nachricht erhalten wird, die vom Endgerät empfangen wird.

5. Verfahren nach Anspruch 4, **dadurch gekennzeichnet, dass** der erste Satz von Formaten aus einer Nachricht von einem Benutzerprofilserver des Kommunikationsnetzes erhalten wird.

6. Kommunikationsvorrichtung für eine Bestimmung eines Satzes von Codierungsformaten, die von einem Endgerät zur Herstellung von Kommunikationen durch ein Kommunikationsnetz genutzt werden können, wobei die Vorrichtung **dadurch gekennzeichnet ist, dass** sie Folgendes aufweist:
- Ein Kommunikationsmodul (304), das geeignet ist, einen ersten Satz von Codierungsformaten, die im Kommunikationsnetz zugelassen sind, von einem Server zu empfangen, wobei jedes Format des Satzes einem Zugangsnetztyp und einem Kommunikationsdiensttyp zugeordnet ist,
- Ein Modul zum Erhalten (306) eines zweiten Satzes von Codierungsformaten, die von einem Endgerät unterstützt werden, das sich im Kommunikationsnetz registriert oder darin registriert ist, eines Zugangsnetztyps und eines Kommunikationsdiensttyps, die vom Endgerät genutzt werden,
- Einen Komparator (307), der geeignet ist, einen dritten Satz von Codierungsformaten zu bestimmen, die vom Endgerät genutzt werden können, wenn der dritte Satz nicht leer ist, um Kommunikationen über das Kommunikationsnetz mittels eines Zugangsnetzes herzustellen, wobei der dritte Satz einem Satz von Codierungsformaten entspricht, die vom Endgerät unterstützt werden und vom Netz zugelassen sind, unter Berücksichtigung des Zugangsnetztyps und des Kommunikationsdiensttyps, der vom Endgerät genutzt wird, wobei die Bestimmungsvorrichtung ferner geeignet ist, eine Entregistrierung des Endgeräts oder ein Herunterladen, auf das Endgerät, eines ausführbaren Moduls zu bewirken, das Anweisungen umfasst, um ein Codierungsformat einzusetzen, das vom Netz zugelassen ist, wenn der dritte Satz leer ist.

7. Kommunikationsvorrichtung nach Anspruch 6, **dadurch gekennzeichnet, dass** wenigstens ein Codierungsformat des ersten Satzes ferner einer Kennung eines Netzzugangspunkts zugeordnet ist.

8. Kommunikationsvorrichtung nach Anspruch 6 oder 7, **dadurch gekennzeichnet, dass**:
- die Kommunikationsvorrichtung im Endgerät enthalten ist,
- der erste Satz von Formaten aus einer Nachricht von einem Server erhalten wird.

9. Kommunikationsvorrichtung nach Anspruch 6 oder 7, **dadurch gekennzeichnet, dass**:
- die Kommunikationsvorrichtung in einem Server enthalten ist, und dadurch, dass:
- der zweite Satz von Formaten aus einer Nachricht erhalten wird, die vom Endgerät empfangen wird.

10. Kommunikationsvorrichtung nach Anspruch 9, **dadurch gekennzeichnet, dass** der erste Satz von Formaten aus einer Nachricht von einem Benutzerprofilserver des Kommunikationsnetzes erhalten wird.

11. Kommunikationsendgerät, **dadurch gekennzeichnet, dass** es eine Kommunikationsvorrichtung nach einem der Ansprüche 6 bis 8 aufweist.

12. Server, **dadurch gekennzeichnet, dass** er eine Kommunikationsvorrichtung nach einem der Ansprüche 6, 9 oder 10 aufweist.

13. Computerprogramm aufweisend Anweisungen für die Ausführung des Bestimmungsverfahrens nach einem der Ansprüche 1 bis 5 durch eine Kommunikationsvorrichtung, wenn das Programm von einem Prozessor ausgeführt wird, der der Kommunikationsvorrichtung zugeordnet ist.

14. Prozessorlesbarer Informationsträger, auf dem ein Computerprogramm gespeichert ist, das Anweisungen für die Ausführung der Schritte des Bestimmungsverfahrens nach einem der Ansprüche 1 bis 5 durch eine Kommunikationsvorrichtung umfasst.

## Claims

1. Method for determining a set of encoding formats usable by a terminal to establish communications via a communication network, the method being **characterized in that** it includes the following steps, implemented by a communication device:
- obtaining, from a server (200), a first set of coding formats permitted on the communication network, each format of the set being associated with a type of access network and with a type of communication service,
- obtaining (201) a second set of coding formats supported by a terminal that registers or is registered on said communication network, a type of access network and a type of communication service which are used by the terminal,
- determining (202) a third set of coding formats usable, when said third set is not empty, by the terminal to establish communications via said communication network via an access network, the third set corresponding to a set of coding formats supported by the terminal and permitted by the network given the type of access network and the type of communication service used by the terminal, and
- deregistering the terminal or downloading, onto the terminal, an executable module comprising instructions for implementing a coding format permitted by the network when the third set of encoding formats is empty.

2. Method according to the preceding claim, **characterized in that** at least one coding format of the first set is furthermore associated with an identifier of a network access point.

3. Method according to either one of the preceding claims, **characterized in that**:
- the method is implemented in said terminal,
- the first set of formats is obtained from a message originating from a server.

4. Method according to either one of Claims 1 and 2, **characterized in that**:
- the method is implemented in a server, and **in that**:
- the second set of formats is obtained from a message received from said terminal.

5. Method according to Claim 4, **characterized in that** the first set of formats is obtained from a message originating from a server of user profiles of the communication network.

6. Communication device for determining a set of encoding formats usable by a terminal to establish communications via a communication network, the device being **characterized in that** it includes:
- a communication module (304) designed to receive, from a server, a first set of coding formats permitted on the communication network, each format of the set being associated with a type of access network and with a type of communication service,
- a module (306) for obtaining a second set of coding formats supported by a terminal that registers or is registered on said communication network, a type of access network and a type of communication service which are used by the terminal,
- a comparator (307) designed to determine a third set of coding formats usable, when the third set is not empty, by the terminal to establish communications via said communication network via an access network, the third set corresponding to a set of coding formats supported by the terminal and permitted by the network given the type of access network and the type of communication service used by the terminal,
said determination device being furthermore designed to trigger deregistration of the terminal or downloading, onto the terminal, of an executable module comprising instructions for implementing a coding format permitted by the network when the third set is empty.

7. Communication device according to Claim 6, **characterized in that** at least one coding format of the first set is furthermore associated with an identifier of a network access point.

8. Communication device according to Claim 6 or 7, **characterized in that**:
- said communication device is included in said terminal,
- the first set of formats is obtained from a message originating from a server.

9. Communication device according to Claim 6 or 7, **characterized in that**:
- said communication device is included in a server, and **in that**:
- the second set of formats is obtained from a message received from said terminal.

10. Communication device according to Claim 9, **characterized in that** the first set of formats is obtained from a message originating from a server of user profiles of the communication network.

11. Communication terminal **characterized in that** it includes a communication device according to any one of Claims 6 to 8.

12. Server **characterized in that** it includes a communication device according to any one of Claims 6, 9 and 10.

13. Computer program including the instructions for the execution of the determination method according to any one of Claims 1 to 5 by a communication device when the program is executed by a processor associated with the communication device.

14. Information medium readable by a processor and on which a computer program comprising instructions for the execution of the steps of the determination method according to any one of Claims 1 to 5 by a communication device is recorded.
